(19) Europäisches Patentamt / European Patent Office / Office européen des brevets

(11) **EP 3 150 434 A1**

(12) **EUROPEAN PATENT APPLICATION**

(43) Date of publication:
05.04.2017 Bulletin 2017/14

(51) Int Cl.:
**B60Q 1/18** (2006.01)  **B60Q 1/12** (2006.01)
**B62J 6/02** (2006.01)

(21) Application number: 16185519.2

(22) Date of filing: 17.04.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 31.05.2012 JP 2012125266

(62) Document number(s) of the earlier application(s) in
accordance with Art. 76 EPC:
13164061.7 / 2 669 116

(71) Applicant: Yamaha Hatsudoki Kabushiki Kaisha
Iwata-shi, Shizuoka 438-8501 (JP)

(72) Inventors:
• KINO, Yasuhiko
  Iwata-shi, Shizuoka 438-8501 (JP)

• OOBA, Junichi
  Shizuoka 438-8501 (JP)
• INOUE, Takehiro
  Iwata-shi, Shizuoka 438-8501 (JP)
• KOSUGI, Makato
  Iwata-shi, Shizuoka 438-8501 (JP)

(74) Representative: Grünecker Patent- und
Rechtsanwälte
PartG mbB
Leopoldstraße 4
80802 München (DE)

Remarks:
This application was filed on 24-08-2016 as a
divisional application to the application mentioned
under INID code 62.

(54) **SUB HEADLIGHT UNIT AND SUB HEADLIGHT SYSTEM FOR USE IN VEHICLE THAT LEANS INTO TURNS, AND VEHICLE THAT LEANS INTO TURNS, AND METHOD FOR CONTROLLING A SUB HEADLIGHT UNIT FOR USE IN VEHICLE THAT LEANS INTO TURNS**

(57) A sub headlight unit for use in a vehicle that leans into turns, the sub headlight unit (13L, 13R) including a plurality of sub headlight light sources (13La, 13Lb, 13Lc, 13Ra, 13Rb, 13Rc) that illuminate, at one side with respect to a width direction of the vehicle, an area ahead and outward of the vehicle with respect to the width direction of the vehicle. Each of the plurality of sub headlight light sources is arranged such that, along with inclination of the vehicle from an upright state to the one side, the sub headlight light source moves downward from its position taken when the vehicle is upright. The plurality of sub headlight light sources are configured to be turned on in accordance with different lean angles of the vehicle leaning to the one side. Under a state where the vehicle is upright, the sub headlight light source configured to be turned on upon a large lean angle of the vehicle is located higher than the sub headlight light source configured to be turned on upon a small lean angle of the vehicle.

FIG.1

**Description**

The present invention relates to a sub headlight unit and a sub headlight system for use in a vehicle that leans into turns, and to a vehicle that leans into turns, and to a method for controlling a sub headlight unit for use in a vehicle that leans into turns.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. Thereby, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a driver operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body largely leans. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high beam (running headlight) and a low beam (passing headlight).

The high beam, which emits light in a horizontal (upward) direction, ensures a field of view at a long distance. Generally, in order to avoid dazzling a rider of a surrounding vehicle or the like, the high beam is used in a situation where there is no vehicle or the like existing ahead at night. The low beam, which emits light in a downward direction, is used even in a situation where there is a vehicle or the like existing ahead. Therefore, in a normal case, a vehicle often runs with the low beam turned on.

When the vehicle that leans into turns is running on a straight road, an illumination range of a headlight light source (low beam) spreads evenly to the left and right in an area ahead in an advancing direction and below a horizontal plane including the headlight light source. When the vehicle that leans into turns is running on a road curving to the left, the vehicle runs with the vehicle body inclined to the left. Accordingly, the illumination range of the headlight light source spreads downward to the left. As a result, a nearer position on a running lane is illuminated. Thus, the illumination range in an area inside the curve and ahead in the advancing direction is reduced.

Therefore, a vehicle has been proposed which is provided with, in addition to a main headlight that illuminates an area ahead of the vehicle, a plurality of sub headlights arranged in a substantially V-shaped manner in a front portion of the vehicle and configured such that the sub headlights arranged at the side opposite to the side to which the vehicle is leaning are sequentially turned on from the lower side along with an increase in a lean angle of the vehicle (the angle of inclination of a vehicle body to the inner side of a curve relative to an upright state thereof) (JP 2009-120057 A). In the vehicle disclosed in JP 2009-120057 A, for example, when the sub headlight arranged second lowermost is turned on under a state where the sub headlight arranged lowermost has been turned on, the sub headlight arranged lowermost is turned off. In this manner, the sub headlight that is turned on is sequentially switched over from the lower side. In the vehicle disclosed in JP 2009-120057 A, at a time point when a sub headlight is turned on, an illumination range of this light source is additionally provided, which can suppress a reduction in the illumination range which may be caused by inclination of the vehicle.

However, in the vehicle disclosed in JP 2009-120057 A, a rider may sometimes feel uncomfortable about a change in the illumination range in the course of sequentially turning on the plurality of sub headlights along with an increase or decrease in the lean angle.

(i) In the vehicle disclosed in JP 2009-120057 A, a plurality of sub headlight light sources arranged at the side opposite to the side to which the vehicle is leaning are sequentially turned on from the lower side along with an increase in the lean angle.
When seen from the front side of the vehicle, a trajectory of movement of the sub headlight light source in accordance with a change in the lean angle of the vehicle is in the shape of a circular arc. Therefore, when the vehicle in the upright state starts to be inclined, the plurality of sub headlight light sources arranged at the side opposite to the side to which the vehicle is leaning firstly move upward. As the lean angle increases, the width of upward movement of the sub headlight light sources decreases. Then, the sub headlight light sources reach the highest position, and then move downward. However, in the vicinity of the highest position, the width of downward movement of the sub headlight light sources is small. That is, in the course of an increase in the lean angle, the sub headlight light sources firstly move from their upright-state position to the highest position. Then, after the sub headlight light sources further move to the side to which the vehicle is leaning by a distance equal to the distance they have moved from the upright-state position to the highest position, the height of the sub headlight light sources return to their upright-state height. During this period, although the lean angle is increasing, the height of the sub headlight light sources does not fall below the upright-state height. In addition, throughout the course of an increase in the lean angle, the width of downward movement of the sub headlight light sources is small, too.

Nevertheless, in the vehicle disclosed in JP 2009-120057 A, the plurality of sub headlight light sources arranged at the side opposite to the side to which the vehicle is leaning are sequentially turned on from the lower side in accordance with an increase in the lean angle.

Therefore, the sub headlight configured to be turned on upon a small lean angle of the vehicle is located at a relatively low position at a time when this sub headlight is turned on, while the sub headlight configured to be turned on upon a large lean angle of the vehicle is located at a relatively high position at a time when this sub headlight is turned on. This causes a relatively large difference in the heights of the sub headlight light sources at times when these sub headlight light sources are turned on. Thus, a difference in the angles of light emission from the respective sub headlight light sources within a rider's field of view is relatively large. As a result, a difference in the shapes of shadows, which are produced when an obstacle (such as unevenness of a ground surface) exists, is large, and a difference in the brightness of reflected light from a road surface or a surrounding object is also large. Moreover, when the angle of light emission varies, the shape of the illumination range is also likely to vary.

(ii) A situation where the vehicle corners or turns at an intersection is not always the same, and there are a wide variety of running scenes.

For example, even on a road having a curve with the same radius, some vehicles pass through the curve at a relatively low speed, and other vehicles pass through the curve at a relatively high speed. At this time, the lean angle of the vehicle passing at the high speed is changed more rapidly than the lean angle of the vehicle passing at the low speed. That is, even though a vehicle passes through a road having a curve with the same radius, the amount of change in the lean angle per unit time varies depending on the vehicle speed.

Furthermore, even when the vehicle is running at the same speed, the lean angle is gently changed in a curve with a large radius while the lean angle is rapidly changed in a curve with a small radius. Accordingly, for example, in a case of continuously passing through a plurality of curves having different radii during touring on a mountain road, the amount of change in the lean angle per unit time changes in each curve, even though the speed does not change so much.

In this manner, the amount of change in the lean angle per unit time varies depending on the running scene. In the course of sequentially turning on the plurality of sub headlights along with an increase or decrease in the lean angle of the vehicle body, when the amount of change in the lean angle per unit time varies, a time interval at which the sub headlights are turned on also varies. For example, as the amount of change in the lean angle per unit time increases, the time interval at which the sub headlights are turned on is shortened.

(iii) When a sub headlight light source is turned on, an illumination range of the sub headlight light source newly appears in the rider's field of view. Therefore, a state of the illumination range produced at a time when the sub headlight light source is turned on is relatively impressive for the rider. Accordingly, for example, when a difference in the states of the illumination ranges at times when the sub headlight light sources are turned on is large when seen from the rider as mentioned in (i) above under a situation where the sub headlight light sources are turned on at short time intervals as mentioned in (ii) above, the state within the rider's field of view is changed one after another. As a result, depending on the running scene, the rider may feel uncomfortable about a change in the state of the illumination range of the sub headlight light source within the field of view.

The present invention has been made in view of the problems described above, and an object of the present invention is to provide a sub headlight unit and a sub headlight system for use in a vehicle that leans into turns, and a vehicle that leans into turns, and a method for controlling a sub headlight unit for use in a vehicle that leans into turns which can suppress occurrence of a situation where a rider feels uncomfortable about a change in an illumination range in the course of sequentially turning on a plurality of sub headlights along with an increase or decrease in the lean angle of a vehicle body.

According to the present invention said object is solved by a sub headlight unit having the features of independent claim 1. Preferred embodiments are laid down in the dependent claims. Moreover, said object is also solved by a sub headlight system for use in a vehicle that leans into turns having thje features of claim 10, and said object is also solved by a vehicle that leans into turns according to claim 11.

Moreover, said object is also solved by a method for controlling a sub headlight unit for use in a vehicle that leans into turns having the features of independent claim 12. Preferred embodiments are laid down in the dependent claims.

Accordingly, it is provided (1) a sub headlight unit for use in a vehicle that leans into turns, the sub headlight unit including a plurality of sub headlight light sources that illuminate, at one side with respect to a width direction of the vehicle, an area ahead and outward of the vehicle with respect to the width direction of the vehicle, each of the plurality of sub headlight light sources being arranged such that, along with inclination of the vehicle from an upright state to the one side, the sub headlight light source moves downward from its position taken when the vehicle is upright, and the plurality of sub headlight light sources being configured to be turned on in accordance with different lean angles of the vehicle leaning to the one side, under a state where the vehicle is upright, the sub headlight light source configured to be turned on upon a large lean angle of the vehicle being located higher than the sub headlight light source configured to be turned on upon a small lean angle of the vehicle.

In a configuration of (1), along with inclination of the vehicle from the upright state to one side, each of the plurality of sub headlight light sources, which illuminate, at the one side with respect to the width direction of the vehicle, an area ahead and outward of the vehicle with respect to the width direction of the vehicle, moves downward from its position taken when the vehicle is upright.

The sub headlight light source located higher when the vehicle is upright and the sub headlight light source located lower when the vehicle is upright move downward in accordance with an increase in the lean angle. At this stage, the width of vertical movement of the sub headlight light source located higher when the vehicle is upright is larger than the width of vertical movement of the sub headlight light source located lower when the vehicle is upright. Accordingly, such a configuration that the sub headlight light sources are sequentially turned on from the one located lowermost when the vehicle is upright in accordance with an increase in the lean angle can reduce a difference in the heights of the sub headlight light sources at times when they are turned on.

In the vehicle disclosed in JP 2009-120057 A, the sub headlight light source is arranged such that, when the vehicle is inclined from the upright state to one side, the sub headlight light source moves upward from its position taken when the vehicle is upright. Additionally, in accordance with an increase in the lean angle, the sub headlight light sources are sequentially turned on from the one located lowermost. This causes the position where the sub headlight light source is turned on to gradually increase in height. As a result, a difference in the heights of the sub headlight light sources at times when they are turned on is increased. In this respect, in the configuration of (1), the sub headlight light source is arranged such that, when the vehicle is inclined from the upright state to one side, the sub headlight light source moves downward from its position taken when the vehicle is upright. Additionally, in accordance with an increase in the lean angle, the sub headlight light sources are sequentially turned on from the one located lowermost. Therefore, while the sub headlight light source that has been turned on is moving downward in accordance with an increase in the lean angle, the sub headlight light source located higher is turned on. This can reduce a difference in the heights of the sub headlight light sources at times when they are turned on.

As a result, a change in the state of an illumination range when seen from the rider can be suppressed, even in a case where the amount of change in the lean angle per unit time is large and time intervals at which the sub headlight light sources are turned on are short. This can consequently suppress occurrence of a situation where the rider feels uncomfortable about a change in the state of the illumination range of the sub headlight light source within the field of view, which may be caused depending on a running scene.

(2) The sub headlight unit according to (1), wherein
the plurality of sub headlight light sources are arranged neighboring one another,
under a state where the vehicle is upright, height positions of the neighboring sub headlight light sources are partially coincident.
A configuration of (2) can further reduce a difference in the heights of the sub headlight light sources at times when they are turned on. Accordingly, when the sub headlight light source is turned on, occurrence of a situation where the rider feels uncomfortable about a change in the state of the sub headlight light source within the field of view, which may be caused depending on a running scene, can be more effectively suppressed.

(3) The sub headlight unit according to (1) or (2), wherein
under a state where the vehicle is upright, the sub headlight light source that is at the highest position when the vehicle is upright is located above a main headlight provided in the vehicle, the main headlight being configured to illuminate an area ahead in front of the vehicle.
In a configuration of (3), the sub headlight light source configured to be turned on upon a larger lean angle is located higher. This enables illumination to be produced from a high position. This can consequently delay a timing of approach of a cut-off line, which approaches from the side of the vehicle in accordance with an increase in the lean

EP 3 150 434 A1

angle after the sub headlight light source is turned on. Additionally, a reduction in the illumination range in accordance with an increase in the lean angle can be made small. Moreover, since the illumination is produced from a high position, setting of the illumination range is easy. Furthermore, the illumination produced from a high position makes it easy for the rider to see an obstacle (such as unevenness on the road surface) and an area behind the obstacle.

(4) The sub headlight unit according to any one of (1) to (3), wherein
under a state where the vehicle is upright, height positions of the plurality of sub headlight light sources are wholly or partially coincident with a height position of a main headlight light source provided in the vehicle, the main headlight light source being configured to illuminate an area ahead in front of the vehicle.

In a configuration of (4), the main headlight light source and the sub headlight light sources can be placed at relatively high positions, which enables illumination to be produced from a high position. This can consequently delay a timing of approach of the cut-off line, which approaches from the side of the vehicle in accordance with an increase in the lean angle. Additionally, a reduction in the illumination range in accordance with an increase in the lean angle can be made small. Moreover, since the illumination is produced from a high position, setting of the illumination range is easy. Furthermore, the illumination produced from a high position makes it easy for the rider to see an obstacle (such as unevenness on the road surface) and an area behind the obstacle.

(5) The sub headlight unit according to any one of (1) to (4), wherein
when seen from the front side of the vehicle in the upright state, positions where the plurality of sub headlight light sources are arranged are displaced from one another with respect to the width direction of the vehicle,
under a state where the vehicle is upright, the sub headlight light source configured to be turned on upon a large lean angle of the vehicle is located higher and more outward with respect to the width direction of the vehicle than the sub headlight light source configured to be turned on upon a small lean angle of the vehicle.

A configuration of (5) can further reduce a difference in the heights of the sub headlight light sources at times when they are turned on. This enables more effective suppression of occurrence of a situation where the rider feels uncomfortable about a change in the state of the illumination range of the sub headlight light source within the field of view, which may be caused depending on a running scene.

(6) The sub headlight unit according to any one of (1) to (5), wherein
when seen from the front side of the vehicle in the upright state, cut-off lines of the plurality of sub headlight light sources are wholly or partially contained in a space above a horizontal line,
under a state where the vehicle is upright, the cut-off line of the sub headlight light source located higher is inclined with a larger inclination angle relative to the horizontal line than the cut-off line of the sub headlight light source located lower.

A configuration of (6) can reduce a difference in the inclination angles of the cut-off lines of the sub headlight light sources relative to the horizontal line at times when the sub headlight light sources are turned on. This enables more effective suppression of occurrence of a situation where the rider feels uncomfortable about a change in the state of the illumination range of the sub headlight light source within the field of view, which may be caused depending on a running scene.

(7) A sub headlight system for use in a vehicle that leans into turns,
the sub headlight system including:

the sub headlight unit according to any one of (1) to (6);
a detection part that detects a variable available for obtaining the lean angle of the vehicle; and
a control part that turns on the plurality of sub headlight light sources in accordance with the lean angle of the vehicle obtained based on a result of detection by the detection part.

A configuration of (7) achieves an AFS (Adaptive Front-Lighting System) that enables suppression of occurrence of a situation where the rider feels uncomfortable about a change in the illumination range in the course of an increase or decrease in the lean angle of the vehicle body.

(8) A vehicle that leans into turns,
the vehicle including the system according to (7).

A configuration of (8) can suppress occurrence of a situation where the rider feels uncomfortable about a change in the illumination range in the course of an increase or decrease in the lean angle of the vehicle body.

These and other objects, features, aspects and advantages of the present invention will become apparent to those skilled in the art from the following detailed description, which, taken in conjunction with the accompanying drawings, discloses some embodiments of the present invention.

The present invention enables suppression of occurrence of a situation where a rider feels uncomfortable about a change in an illumination range in the course of an increase or decrease in a lean angle of a vehicle body.

5

BRIEF DESCRIPTION OF THE DRAWINGS

[FIG. 1] A front elevational view schematically showing, on an enlarged scale, a part of a motorcycle according to an embodiment of the present invention.

[FIG. 2] A left side view showing, on an enlarged scale, a part of the motorcycle shown in FIG. 1.

[FIG. 3] A block diagram showing a basic configuration concerning sub headlight light sources of the motorcycle shown in FIG. 1.

[FIG. 4] (a) is a front elevational view schematically showing optical axes and cut-off lines of the sub headlight light sources of the motorcycle in an upright state; and (b) is a front elevational view schematically showing the optical axes and the cut-off lines of the sub headlight light sources of the motorcycle with a lean attitude.

[FIG. 5] (a) to (c) are diagrams for explaining an example of a process in which a plurality of sub headlight light sources are sequentially turned on in accordance with an increase in a lean angle of the motorcycle leaning to the left.

[FIG. 6] A front elevational view schematically showing the motorcycle during the process in which the plurality of sub headlight light sources are turned on in accordance with an increase in the lean angle of the motorcycle leaning to the left.

[FIG. 7] (a) to (d) are front elevational views each schematically showing, on an enlarged scale, a part of a motorcycle according to another embodiment of the present invention.

[FIG. 8] (a) to (f) are front elevational views each schematically showing, on an enlarged scale, a part of a motorcycle according to another embodiment of the present invention.

[FIG. 9] (a) to (d) are front elevational views each schematically showing, on an enlarged scale, a part of a motorcycle according to another embodiment of the present invention.

EMBODIMENTS FOR CARRYING OUT THE INVENTION

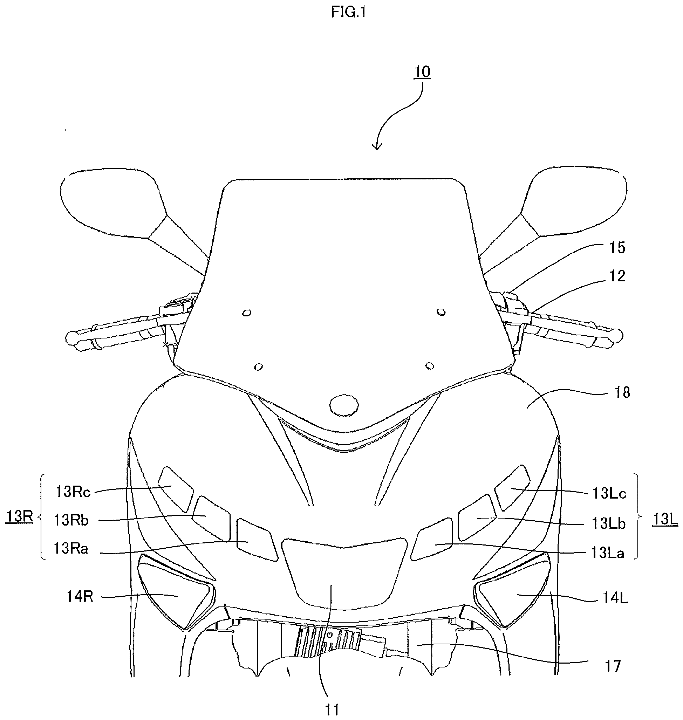

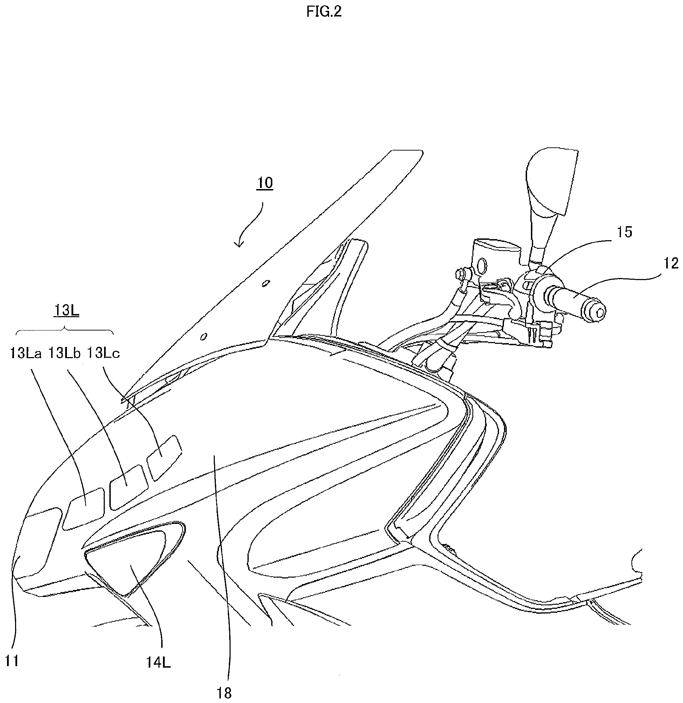

FIG. 1 is a front elevational view schematically showing, on an enlarged scale, a part of a motorcycle according to an embodiment of the present teaching. FIG. 2 is a left side view showing, on an enlarged scale, a part of the motorcycle shown in FIG. 1.

A motorcycle 10 is an example of a vehicle that leans into turns according to the present teaching. According to the present teaching, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.

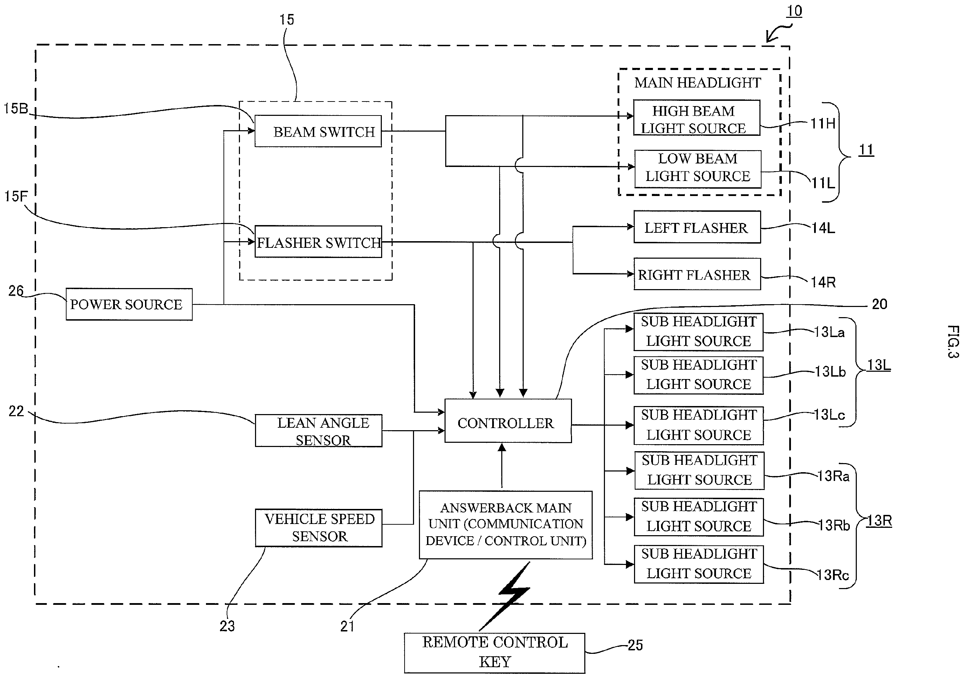

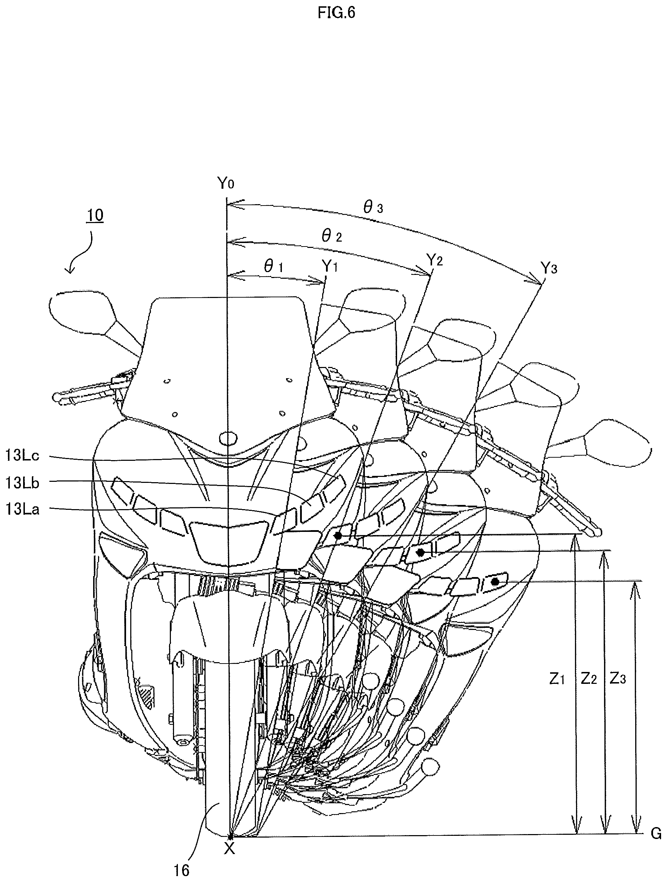

The motorcycle 10 includes a handlebar 12. An operation switch 15 is provided in a left portion of the handlebar 12 with respect to a width direction of the vehicle. The operation switch 15 includes a beam switch 15B and a flasher switch 15F (see FIG. 3). A steering shaft (not shown) is fixed to a center portion of the handlebar 12 with respect to the width direction of the vehicle. The steering shaft extends downward through a headpipe (not shown). A frontfork 17 is provided at a lower end of the steering shaft. A front wheel (see FIG. 6) is rotatably supported at the lower end of the frontfork 17. The headpipe is a member constituting a vehicle body frame. According to the present teaching, no particular limitation is put on the vehicle body frame, and a conventionally known configuration is adoptable.

A front cover 18 is provided ahead of the headpipe having the steering shaft passing therethrough. The front cover 18 is arranged in a central part of the motorcycle 10 with respect to the width direction of the vehicle. A main headlight light source 11 is provided in the front cover 18. In this embodiment, the main headlight light source 11 includes a high beam light source 11 H (running headlight) and a low beam light source 11 L (passing headlight), though not shown in FIG. 1. The high beam light source 11 H illuminates an area ahead in front of the motorcycle 10 at a height equal to or above a horizontal plane of the main headlight light source 11. The low beam light source 11 L illuminates an area ahead in front of the motorcycle 10 at a height below the horizontal plane of the main headlight light source 11.

The motorcycle 10 includes two sub headlight units 13L and 13R of variable light distribution type. Each of the sub headlight units 13L and 13R is provided at each side with respect to the width direction of the vehicle.

The sub headlight unit 13L includes a plurality of sub headlight light sources 13La, 13Lb, and 13Lc. The sub headlight light sources 13La, 13Lb, and 13Lc are arranged in this order from the center toward the upper left with respect to the width direction of the vehicle. That is, the sub headlight light sources 13La, 13Lb, and 13Lc are arranged in this order from the lower side.

Additionally, the plurality of sub headlight light sources 13La, 13Lb, and 13Lc are arranged neighboring one another. The sub headlight light sources 13La and 13Lb neighbor each other, and the sub headlight light sources 13Lb and 13Lc neighbor each other. When the motorcycle 10 is upright, the height positions of the neighboring sub headlight light sources are partially coincident. The plurality of sub headlight light sources 13La, 13Lb, and 13Lc are arranged in the shape of a curve protruding downward and outward (toward the lower left). Illumination ranges of the sub headlight light sources 13La, 13Lb, and 13Lc are arranged in this order from the center toward the upper left with respect to the width direction of the vehicle. The illumination ranges overlap one another.

The sub headlight unit 13R includes a plurality of sub headlight light sources 13Ra, 13Rb, and 13Rc. The sub headlight light sources 13Ra, 13Rb, and 13Rc are arranged in this order from the center toward the upper right with respect to the width direction of the vehicle. That is, the sub headlight light sources 13Ra, 13Rb, and 13Rc are arranged in this order from the lower side.

Additionally, the plurality of sub headlight light sources 13Ra, 13Rb, and 13Rc are arranged neighboring one another. The sub headlight light sources 13Ra and 13Rb neighbor each other, and the sub headlight light sources 13Rb and 13Rc neighbor each other. When the motorcycle 10 is upright, the height positions of the neighboring sub headlight light sources are partially coincident. The plurality of sub headlight light sources 13Ra, 13Rb, and 13Rc are arranged in the shape of a curve protruding downward and outward (toward the lower right). Illumination ranges of the sub headlight light sources 13Ra, 13Rb, and 13Rc are arranged in this order from the center toward the upper right with respect to the width direction of the vehicle. The illumination ranges overlap one another.

Each of the sub headlight light sources 13La, 13Lb, 13Lc, and 13Ra, 13Rb, 13Rc has a shape that extends from the lower and inner side with respect to the width direction of the vehicle toward the upper and outer side with respect to the width direction of the vehicle. The longer sides of each of the sub headlight light sources 13La, 13Lb, and 13Lc extend along an alignment direction in which the sub headlight light sources 13La, 13Lb, and 13Lc are aligned. The shorter sides of the sub headlight light sources 13La, 13Lb, and 13Lc are opposed to one another.

Optical axes of the sub headlight light sources 13La to 13Lc, 13Ra to 13Rc are fixed, and not moved in accordance with the lean angle. A reflector (not shown) of the sub headlight light source is also fixed, and not moved in accordance with the lean angle. In this embodiment, no particular limitation is put on the sub headlight light source. For example, an LED is adoptable. A mono-focus type light source is also adoptable as the sub headlight light source. As for how the sub headlight light sources 13La to 13Lc, 13Ra to 13Rc are arranged in the motorcycle 10, the above-described arrangement manner is merely an illustrative example of the present teaching. The present teaching is not limited to this example.

When the motorcycle 10 is upright (see FIGS. 1 and 2), the sub headlight light sources 13Lc and 13Rc, which are at the highest position among the plurality of sub headlight light sources 13La to 13Lc, 13Ra to 13Rc, are located above the main headlight light source 11. This enables the sub headlight light sources 13La to 13Lc, 13Ra to 13Rc to be kept in relatively high positions. Therefore, occurrence of a situation where the rider feels uncomfortable about a change in the illumination range can be further effectively suppressed.

When the motorcycle 10 is upright (see FIG. 2), the plurality of sub headlight light sources 13La to 13Lc are located rearward of the main headlight light source 11.

When the motorcycle 10 is upright (see FIGS. 1 and 2), the height positions of the plurality of sub headlight light sources 13La to 13Lc, 13Ra to 13Rc are partially coincident with the height position of the main headlight light source 11. However, the present teaching is not limited to this example. It may be also acceptable that the height positions of the plurality of sub headlight light sources 13La to 13Lc, 13Ra to 13Rc are wholly coincident with the height position of the main headlight light source 11.

When seen from the front side of the motorcycle 10 in an upright state (see FIG. 1), the positions of the plurality of sub headlight light sources 13La to 13Lc, 13Ra to 13Rc are displaced from one another with respect to the width direction of the vehicle.

A front end of the front cover 18 with respect to a front-back direction of the vehicle is arranged at the center side of the motorcycle 10. The front cover 18 has a curved surface that is outwardly convex and extends from the front and center side with respect to the width direction of the vehicle toward a direction rearward and outward with respect to the width direction of the vehicle. The sub headlight light sources 13La to 13Lc, 13Ra to 13Rc are arranged along the curved surface of the front cover 18.

Optical axes of the sub headlight light sources 13La to 13Lc, 13Ra to 13Rc are fixed, and not moved in accordance with the lean angle. A reflector (not shown) of the sub headlight light source is also fixed, and not moved in accordance with the lean angle. In this embodiment, no particular limitation is put on the sub headlight light source. For example, an LED is adoptable. A mono-focus type light source is also adoptable as the sub headlight light source. As for how the sub headlight light sources 13La to 13Lc, 13Ra to 13Rc are arranged in the motorcycle 10, the above-described arrangement manner is merely an illustrative example of the present teaching. The present teaching is not limited to this example.

Flashers 14L and 14R, serving as direction indicators, are provided at both sides of the motorcycle 10 with respect to the width direction of the vehicle.

FIG. 3 is a block diagram showing a basic configuration concerning the sub headlight light sources 13La to 13Lc, 13Ra to 13Rc of the motorcycle 10 shown in FIG. 1.

The operation switch 15 includes the beam switch 15B and the flasher switch 15F. The beam switch 15B is connected to the high beam light source 11 H and the low beam light source 11 L included in the main headlight light source 11. When the rider operates the beam switch 15B, turn-on/turn-off of the high beam light source 11 H and the low beam light source 11 L is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about the front-back axis of the motorcycle 10. The lean angle sensor 22 supplies, to a controller 20, a signal indicating the detected angular velocity (roll rate) about the front-back axis. The vehicle speed sensor 23 detects the vehicle speed, and supplies, to the controller 20, a signal indicating the detected vehicle speed. Each time a predetermined timing comes during running, the controller 20 calculates the lean angle of the motorcycle 10 based on the angular velocity about the front-back axis and the vehicle speed.

In this embodiment, the roll rate is integrated over time, and the vehicle speed is used as correction information, thereby calculating the lean angle. However, according to the present teaching, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about the vertical axis) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 20 includes a memory (not shown). The memory stores, in the form of data, a plurality of reference values (°) to be compared with the lean angle. In this embodiment, the memory stores three reference values. The reference values are different from one another, and associated with the sub headlight light sources 13La, 13Lb, and 13Lc, respectively. The reference value increases in the order of the reference values associated with the sub headlight light sources 13La, 13Lb, and 13Lc.

When the lean angle of the motorcycle 10 leaning to the left is equal to or larger than the reference value, the controller 20 turns on the sub headlight light source having this reference value associated therewith among the sub headlight light sources 13La to 13Lc arranged at the same side as the side to which the motorcycle 10 is leaning. On the other hand, when the lean angle is less than the reference value, the controller 20 turns off the sub headlight light source. The reference value increases in the order of the reference values associated with the sub headlight light sources 13La, 13Lb, and 13Lc. Therefore, in the course of an increase in the lean angle, the sub headlight light sources 13La, 13Lb, and 13Lc are turned on in this order. In the course of a decrease in the lean angle, the sub headlight light sources 13Lc, 13Lb, and 13La are turned off in this order.

The sub headlight light sources 13Ra, 13Rb, and 13Rc also have reference values associated therewith, similarly to the sub headlight light sources 13La, 13Lb, and 13Lc.

The sub headlight light sources 13La to 13Lc, 13Ra to 13Rc are connected to the controller 20. A power source 26 is connected to the high beam light source 11 H and the low beam light source 11L via the beam switch 15B. The power source 26 is connected to the flashers 14L and 14R via the flasher switch 15F. The power source 26 is connected to the controller 20. An answerback main unit 21 is connected to the controller 20. The answerback main unit 21 receives a signal radio wave from a remote control key 25.

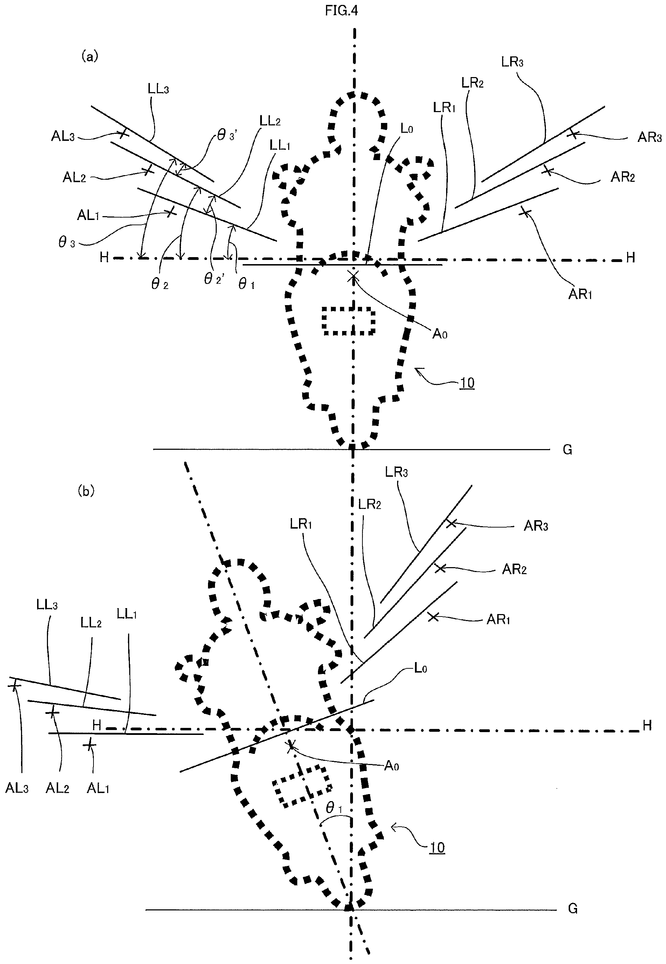

FIG. 4(a) is a front elevational view schematically showing optical axes and cut-off lines of the sub headlight light sources 13La to 13Lc, 13Ra to 13Rc of the motorcycle 10 in the upright state. FIG. 4(b) is a front elevational view schematically showing the optical axes and the cut-off lines of the sub headlight light sources 13La to 13Lc, 13Ra to 13Rc of the motorcycle 10 with a lean attitude.

As shown in FIG. 4(a), the motorcycle 10 stands upright on a flat ground G. An optical axis $A_0$ of the low beam light source 11 L is located below a horizontal line H of the low beam light source 11 L. A cut-off line $L_0$ of the low beam light source 11 L is located above the optical axis $A_0$, and located below the horizontal line H of the low beam light source 11 L. The cut-off line $L_0$ extends right and left along the width direction of the vehicle. An illumination range of the low beam light source 11 L covers both right and left sides with respect to the width direction of the vehicle.

The optical axes $AL_1$ to $AL_3$ of the sub headlight light sources 13La to 13Lc are located outward in the order of the optical axes $AL_1$ to $AL_3$ with respect to the width direction of the vehicle. The optical axes $AL_1$ to $AL_3$ of the sub headlight light sources 13La to 13Lc are located above the optical axis $A_0$ of the low beam light source 11 L.

Cut-off lines $LL_1$ to $LL_3$ of the sub headlight light sources 13La to 13Lc are wholly contained in a space above the horizontal line H.

Inclination angles $\theta_1$ to $\theta_3$ of the cut-off lines $LL_1$ to $LL_3$ of the sub headlight light sources 13La to 13Lc increase in the order of the inclination angles $\theta_1$ to $\theta_3$.

The inclination angles $\theta_1$ to $\theta_3$ of the cut-off lines $LL_1$ to $LL_3$ of the sub headlight light sources 13La to 13Lc are set to be values increasing at intervals from 0° to $\theta_1$, $\theta_2$, and $\theta_3$ in this order. The interval between 0° and $\theta_1$ is $\theta_1$. When the interval between $\theta_2$ and $\theta_1$ is defined as $\theta_2'$ and the interval between $\theta_3$ and $\theta_2$ is defined as $\theta_3'$, the intervals $\theta_1$, $\theta_2'$, and $\theta_3'$ satisfy the relationship of $\theta_1 = \theta_2' = \theta_3'$. In other words, the intervals ($\theta_1$, $\theta_2'$, $\theta_3'$) are regular intervals. Here, according to the present teaching, the intervals are not limited to this example. For example, the relationship among the intervals $\theta_1$, $\theta_2'$, and $\theta_3'$ may be $\theta_1 > \theta_2' > \theta_3'$.

In this embodiment, the reference values (°) for turning on the sub headlight light sources 13La, 13Lb, 13Lc are set to be $\theta_1$, $\theta_2$, and $\theta_3$, respectively. Accordingly, when the motorcycle 10 is running in the upright state ($\theta=0$), the sub headlight light sources 13La to 13Lc, 13Ra to 13Rc are not turned on. As shown in FIG. 4(b), when the motorcycle 10 is inclined to one side (to the left in FIG. 4) with respect to the width direction of the vehicle so that the lean angle reaches $\theta_1$, it means that the lean angle of the motorcycle 10 reaches the reference value. Therefore, the sub headlight light source 13La arranged at the same side (left side) as the side to which the motorcycle 10 is leaning is turned on. At this time, the cut-off line $LL_1$ is horizontal. Then, when the lean angle reaches $\theta_2$ along with an increase in the lean angle, the sub headlight light source 13Lb is turned on, with the cut-off line $LL_2$ being horizontal at this time. Then, when the lean angle reaches $\theta_3$ along with an increase in the lean angle, the sub headlight light source 13Lc is turned on, with the cut-off line $LL_3$ being horizontal at this time.

The relationship between the inclination angle ($\theta_1$ to $\theta_3$) of the cut-off line ($LL_1$ to $LL_3$) of each sub headlight light source (13La to 13Lc) and the reference value set for this sub headlight light source (13La to 13Lc) is not limited to this example. These values (angles) may be different from each other. Here, a state where these values are the same encompasses a state where these values are substantially the same.

The cut-off lines $LL_1$ to $LL_3$ of the sub headlight light sources 13La to 13Lc define the upper end edges of the illumination ranges of the sub headlight light sources 13La to 13Lc, respectively, though not shown in FIG. 4. Therefore, the illumination ranges of the sub headlight light sources 13La to 13Lc are located below the cut-off lines $LL_1$ to $LL_3$ of the sub headlight light sources 13La to 13Lc. Accordingly, each of the illumination ranges of the sub headlight light sources 13La to 13Lc contains a space above the horizontal line H, and their locations are higher in ascending order of the illumination range of the sub headlight light source 13La, the illumination range of the sub headlight light source 13Lb, and the illumination range of the sub headlight light source 13Lc. The illumination ranges of the sub headlight light sources 13La to 13Lc are located at the left side with respect to the width direction of the vehicle.

Except for whether the sub headlight light sources are provided at the right side or the left side of the symmetry, the sub headlight light sources 13Ra to 13Rc are identical to the sub headlight light sources 13La to 13Lc described above. Therefore, a description thereof will be omitted.

Here, according to the present teaching, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-Surface Illuminance (Lx)} = \text{Screen Illuminance (Lx)} \times [(\text{Distance between D and F (m)}) / (\text{Distance between D and E (m)})]^2 \quad \ldots \text{(I)}$$

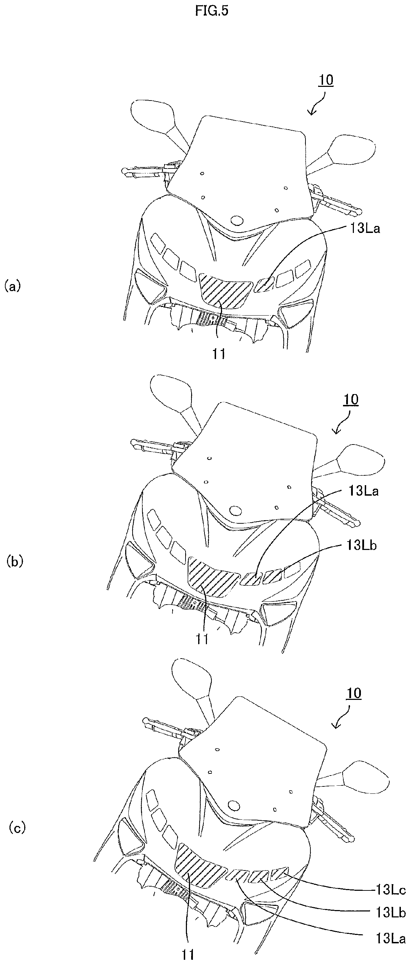

FIGS. 5(a) to 5(c) are diagrams for explaining an example of a process in which the plurality of sub headlight light sources 13La to 13Lc are sequentially turned on in accordance with an increase in the lean angle of the motorcycle 10 leaning to the left.

In the course of an increase in the lean angle of the motorcycle 10 leaning to the left, firstly, when the lean angle takes a value equal to or greater than the smallest reference value ($\theta_1$), the sub headlight light source 13La arranged lowermost is turned on (FIG. 5(a)).

Then, when the lean angle takes the second smallest reference value ($\theta_2$), the sub headlight light source 13Lb arranged second lowermost is turned on (FIG. 5(b)).

Then, when the lean angle takes a value equal to or greater than the greatest reference value ($\theta_3$), the sub headlight light source 13Lc arranged uppermost is turned on (FIG. 5(c)).

In this manner, in the motorcycle 10, when the motorcycle 10 is upright, the sub headlight light source 13Lb configured to be turned on upon a larger lean angle of the motorcycle 10 is located higher than the sub headlight light source 13La configured to be turned on upon a smaller lean angle of the motorcycle 10. The same applies to the relationship between the sub headlight light sources 13Lb and 13Lc. As a result, in accordance with an increase in the lean angle of the motorcycle 10, the sub headlight light sources 13La to 13Lc are sequentially turned on from the one located lowermost when the motorcycle 10 is upright. This can suppress a change in the state of the illumination range when seen from the rider, even in a case where the amount of change in the lean angle per unit time is large so that the time intervals at which the sub headlight light sources 13La, 13Lb, and 13Lc are turned on are short. This can consequently suppress occurrence of a situation where the rider feels uncomfortable about a change in the states of the illumination ranges of the sub headlight light sources 13La, 13Lb, and 13Lc within the field of view, which may be caused depending on a running scene.

Additionally, in the motorcycle 10, the sub headlight light source located lower is arranged inner with respect to the width direction of the vehicle. Therefore, in accordance with an increase in the lean angle, the sub headlight light sources 13La to 13Lc are sequentially turned on from the sub headlight light source 13La located innermost with respect to the width direction of the vehicle. This can further reduce a difference in the heights of the sub headlight light sources 13La, 13Lb, and 13Lc at times when they are turned on. As a result, occurrence of a situation where the rider feels uncomfortable about a change in the state of the illumination range within the field of view, which may be caused depending on a running scene, can be more effectively suppressed.

The same is true for a manner in which the right sub headlight light sources 13Ra to 13Rc are turned on in the course of an increase in the lean angle of the motorcycle 10 leaning to the right.

FIG. 6 is a front elevational view schematically showing the motorcycle 10 during the process in which the plurality of sub headlight light sources 13La to 13Lc are turned on in accordance with an increase in the lean angle of the motorcycle 10 leaning to the left.

In FIG. 6, the motorcycle 10 leans to the left while the front wheel 16 is in contact with a grounding position X on the ground G.

In the upright state, a center line $Y_0$ of the motorcycle 10 is perpendicular to the ground G. The center line $Y_0$ is a line extending in the vertical direction and passing through the center of the motorcycle 10 in the upright state with respect to the width direction of the vehicle.

When the lean angle of the motorcycle 10 leaning to the left reaches $\theta_1$ the sub headlight light source 13La is turned on. At this time, the center line $Y_0$ has shifted to a center line $Y_1$. At this stage, the height of the sub headlight light source 13La being turned on is $Z_1$.

When the lean angle of the motorcycle 10 leaning to the left reaches $\theta_2$, the sub headlight light source 13Lb is turned on. At this time, the center line $Y_1$ has shifted to the center line $Y_2$. At this stage, the height of the sub headlight light source 13Lb being turned on is $Z_2$.

When the lean angle of the motorcycle 10 leaning to the left reaches $\theta_3$, the sub headlight light source 13Lc is turned on. At this time, the center line $Y_2$ has shifted to the center line $Y_3$. At this stage, the height of the sub headlight light source 13Lc being turned on is $Z_3$.

In this manner, in FIG. 6, the heights $Z_1$, $Z_2$, and $Z_3$ of the sub headlight light sources 13La to 13Lc being turned on become lower in accordance with an increase in the lean angle of the motorcycle 10 leaning to the left ($Z_1 > Z_2 > Z_3$). However, in the motorcycle 10, while the positions of the sub headlight light sources 13La to 13Lc are moving downward in the course of an increase in the lean angle, the sub headlight light sources 13La to 13Lc are sequentially turned on from the lower side. This can reduce a difference in the heights of the sub headlight light sources 13La to 13Lc at times when they are turned on.

Although the sub headlight units 13L and 13R and the motorcycle 10 have been described with reference to FIGS. 1 to 6, the present teaching is not limited to the example illustrated in FIGS. 1 to 6.

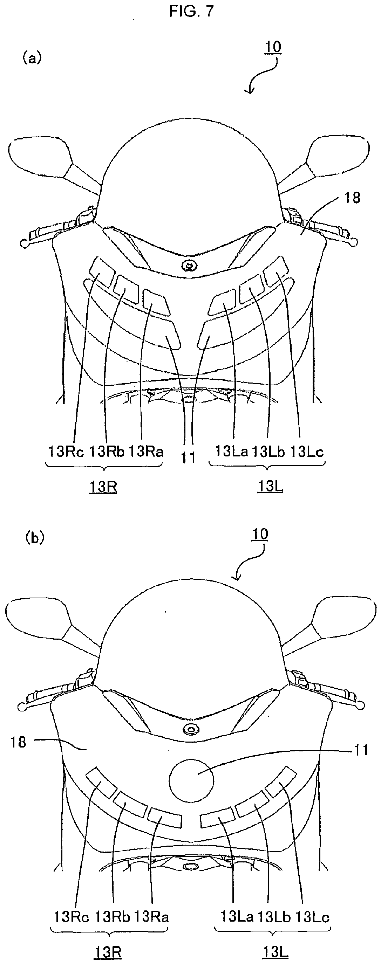

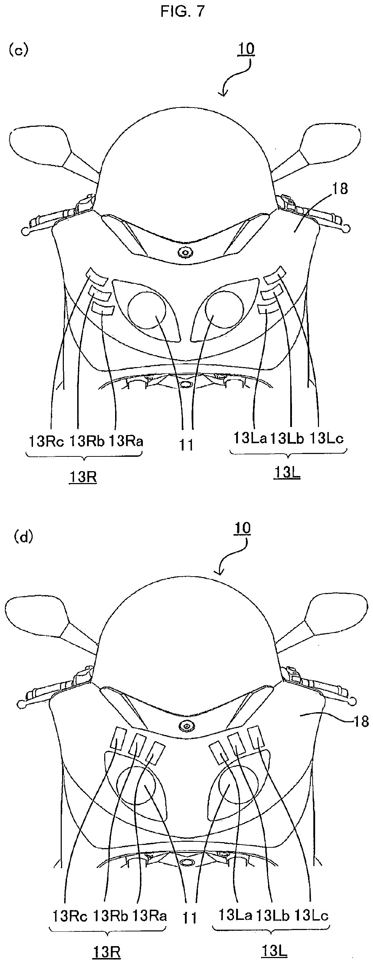

Next, other embodiments of the present teaching will be described with reference to FIGS. 7 to 9.

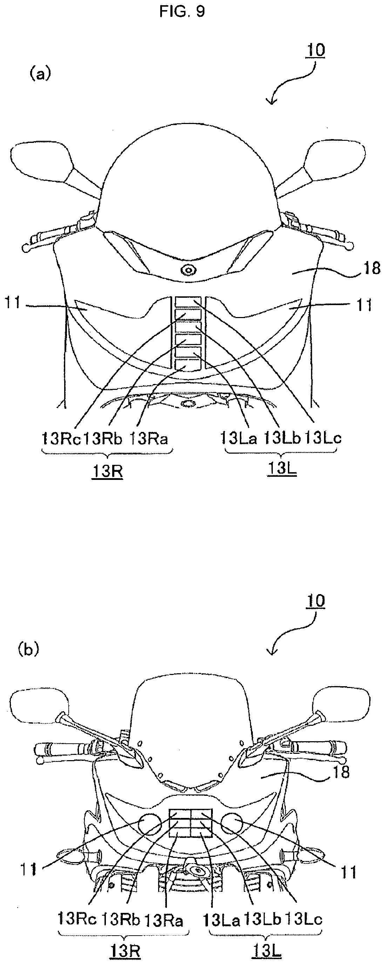

In FIGS. 7 to 9, configurations equivalent to the configurations shown in FIGS. 1 to 6 are given the same reference signs as those used in FIGS. 1 to 6. In examples illustrated in FIGS. 7 to 9 as well as the example illustrated in FIGS. 1 to 6, the sub headlight light sources 13La, 13Lb, and 13Lc that illuminate an area ahead and to the left of the vehicle are turned on in this order in accordance with an increase in the lean angle of the motorcycle 10 leaning to the left; and the sub headlight light sources 13Ra, 13Rb, and 13Rc that illuminate an area ahead and to the right of the vehicle are turned on in this order in accordance with an increase in the lean angle of the motorcycle 10 leaning to the right. Since the sub headlight light sources are arranged symmetrically at right and left sides, only the sub headlight light sources arranged at one side will be described below except descriptions of FIGS. 9(a) and 9(b).

FIG. 7 illustrates examples in which, similarly to the example illustrated in FIGS. 1 to 6, a plurality of sub headlight light sources are sequentially turned on in accordance with an increase in the lean angle in the order from the sub headlight light source arranged at the lower and inner side with respect to the width direction of the vehicle to the sub headlight light source arranged at the upper and outer side with respect to the width direction of the vehicle.

FIGS. 7(a) to (d) are front elevational views each schematically showing, on an enlarged scale, a part of a motorcycle according to another embodiment of the present teaching.

In an example shown in FIG. 7(a), the motorcycle 10 includes main headlight light sources 11 of two lamp type. Each of the main headlight light sources 11 is provided in each of right and left portions on the front surface of the front cover 18. The sub headlight light sources 13La, 13Lb, and 13Lc are provided above the left-side main headlight light source 11.

The sub headlight light sources 13La, 13Lb, and 13Lc are arranged in this order from the lower and inner side with respect to the width direction of the vehicle to the upper and outer side with respect to the width direction of the vehicle. The positions where the sub headlight light sources 13La, 13Lb, and 13Lc are provided are displaced from one another with respect to the width direction of the vehicle. The sub headlight light sources 13La, 13Lb, and 13Lc are arranged in the shape of a curve protruding downward and outward. The sub headlight light sources 13La, 13Lb, and 13Lc are arranged neighboring one another. The height positions of neighboring ones of the sub headlight light sources 13La, 13Lb, and 13Lc are partially coincident.

All the sub headlight light sources 13La, 13Lb, and 13Lc are located above the main headlight light source 11, and arranged along the upper edge of the main headlight light source 11.

Each of the sub headlight light sources 13La, 13Lb, and 13Lc has a shape that extends from the lower and inner side with respect to the width direction of the vehicle toward the upper and outer side with respect to the width direction of the vehicle. The longer sides of each of the sub headlight light sources 13La, 13Lb, and 13Lc extend along an alignment direction in which the sub headlight light sources 13La, 13Lb, and 13Lc are aligned. The shorter sides of the sub headlight light sources 13La, 13Lb, and 13Lc are opposed to one another.

In an example shown in FIG. 7(b), a main headlight light source 11 of single lamp type is provided in a center portion on the front surface of the front cover 18.

The sub headlight light sources 13La, 13Lb, and 13Lc are arranged in this order from the lower and inner side with respect to the width direction of the vehicle to the upper and outer side with respect to the width direction of the vehicle. The positions where the sub headlight light sources 13La, 13Lb, and 13Lc are provided are displaced from one another with respect to the width direction of the vehicle. The sub headlight light sources 13La, 13Lb, and 13Lc are arranged in the shape of a curve protruding downward and outward. The sub headlight light sources 13La, 13Lb, and 13Lc are arranged neighboring one another. The height positions of neighboring ones of the sub headlight light sources 13La, 13Lb, and 13Lc are partially coincident.

The sub headlight light source 13La, which is arranged lowermost, is located below the main headlight light source 11. The height position of the sub headlight light source 13Lc, which is arranged uppermost, is partially coincident with the height position of the main headlight light source 11. The sub headlight light source 13Lc, which is arranged outermost, is located more outward than the main headlight light source 11 with respect to the width direction of the vehicle.

Each of the sub headlight light sources 13La, 13Lb, and 13Lc has a shape that extends from the lower and inner side with respect to the width direction of the vehicle toward the upper and outer side with respect to the width direction of the vehicle. The longer sides of each of the sub headlight light sources 13La, 13Lb, and 13Lc extend along an alignment direction in which the sub headlight light sources 13La, 13Lb, and 13Lc are aligned. The shorter sides of the sub headlight light sources 13La, 13Lb, and 13Lc are opposed to one another.

In an example shown in FIG. 7(c), the motorcycle 10 includes main headlight light sources 11 of two lamp type. Each of the main headlight light sources 11 is provided in each of right and left portions on the front surface of the front cover 18. The sub headlight light sources 13La, 13Lb, and 13Lc are provided outward (to the left) of the left main headlight 11.

The sub headlight light sources 13La, 13Lb, and 13Lc are arranged in this order from the lower and inner side with respect to the width direction of the vehicle to the upper and outer side with respect to the width direction of the vehicle. The sub headlight light sources 13La, 13Lb, and 13Lc overlap one another with respect to the vertical direction.

The sub headlight light source 13Lc, which is arranged uppermost, is located above the main headlight light source 11. The height position of the sub headlight light source 13La, which is arranged lowermost, is partially coincident with the height position of the main headlight light source 11.

Each of the sub headlight light sources 13La, 13Lb, and 13Lc has a shape that extends from the lower and inner side with respect to the width direction of the vehicle toward the upper and outer side with respect to the width direction of the vehicle. The longer sides of the sub headlight light sources 13La, 13Lb, and 13Lc are opposed to one another with respect to the vertical direction.

In an example shown in FIG. 7(d), the motorcycle 10 includes main headlight light sources 11 of two lamp type.

Each of the main headlight light sources 11 is provided in each of right and left portions on the front surface of the front cover 18. The sub headlight light sources 13La, 13Lb, and 13Lc are provided above the left-side main headlight light source 11.

The sub headlight light sources 13La, 13Lb, and 13Lc are arranged in this order from the lower and inner side with respect to the width direction of the vehicle to the upper and outer side with respect to the width direction of the vehicle. The positions where the sub headlight light sources 13La, 13Lb, and 13Lc are provided are displaced from one another with respect to the width direction of the vehicle. The sub headlight light sources 13La, 13Lb, and 13Lc are arranged in the shape of a curve protruding upward and inward. The sub headlight light sources 13La, 13Lb, and 13Lc are arranged neighboring one another. The height positions of neighboring ones of the sub headlight light sources 13La, 13Lb, and 13Lc are partially coincident.

All the sub headlight light sources 13La, 13Lb, and 13Lc are located above the main headlight light source 11.

Each of the sub headlight light sources 13La, 13Lb, and 13Lc has a shape that extends from the lower and outer side with respect to the width direction of the vehicle toward the upper and inner side with respect to the width direction of the vehicle. The longer sides of the sub headlight light sources 13La, 13Lb, and 13Lc are opposed to one another with respect to the width direction of the vehicle. The shorter sides of each of the sub headlight light sources 13La, 13Lb, and 13Lc extend along an alignment direction in which the sub headlight light sources 13La, 13Lb, and 13Lc are aligned.

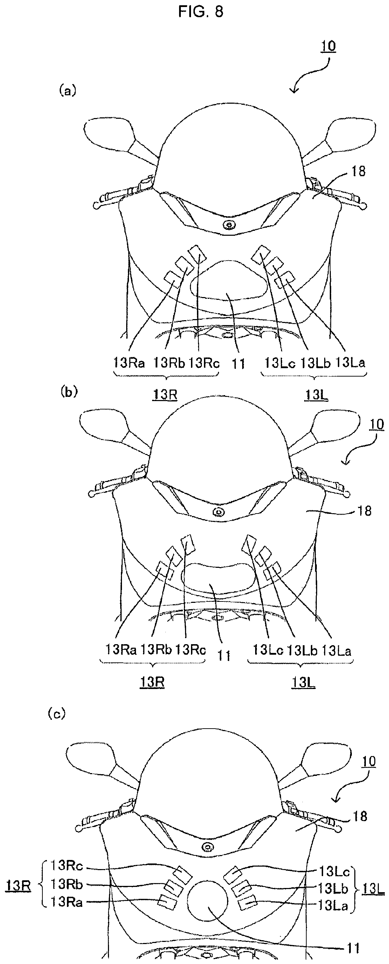

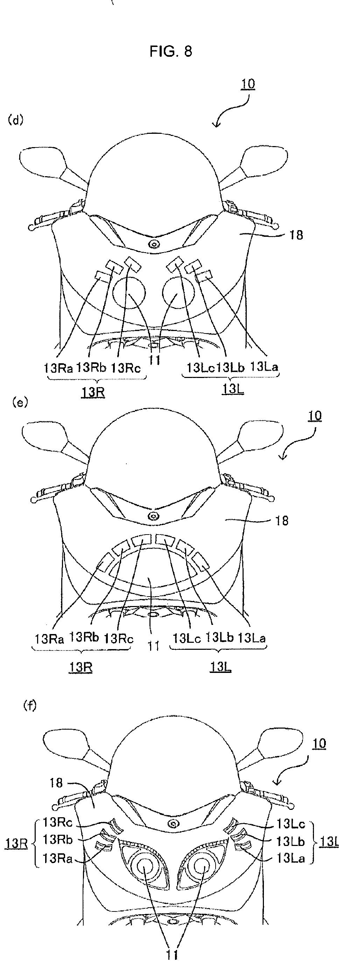

FIG. 8 illustrates examples in which a plurality of sub headlight light sources are sequentially turned on in accordance with an increase in the lean angle in the order from the sub headlight light source arranged at the lower and outer side with respect to the width direction of the vehicle to the sub headlight light source arranged at the upper and inner side with respect to the width direction of the vehicle.

FIGS. 8(a) to 8(f) are front elevational views each schematically showing, on an enlarged scale, a part of a motorcycle according to another embodiment of the present teaching.

In an example shown in FIG. 8(a), a main headlight light source 11 of single lamp type is provided in a center portion on the front surface of the front cover 18.

The sub headlight light sources 13La, 13Lb, and 13Lc are provided above and outward of the main headlight light source 11, and arranged in this order from the lower and outer side with respect to the width direction of the vehicle to the upper and inner side with respect to the width direction of the vehicle.

Each of the sub headlight light sources 13La, 13Lb, and 13Lc has a shape that extends from the lower and inner side with respect to the width direction of the vehicle toward the upper and outer side with respect to the width direction of the vehicle. The shorter sides of each of the sub headlight light sources 13La, 13Lb, and 13Lc extend along an alignment direction in which the sub headlight light sources 13La, 13Lb, and 13Lc are aligned. The longer sides of the sub headlight light sources 13La, 13Lb, and 13Lc are opposed to one another.

In an example shown in FIG. 8(b), a main headlight light source 11 of single lamp type is provided in a center portion on the front surface of the front cover 18.

The sub headlight light sources 13La, 13Lb, and 13Lc are provided above and outward of the main headlight light source 11, and arranged in this order from the lower and outer side with respect to the width direction of the vehicle to the upper and inner side with respect to the width direction of the vehicle. The sub headlight light sources 13La, 13Lb, and 13Lc are arranged in the shape of a curve protruding upward and outward.

Each of the sub headlight light sources 13La, 13Lb, and 13Lc has a shape that extends from the lower and inner side with respect to the width direction of the vehicle toward the upper and outer side with respect to the width direction of the vehicle. The shorter sides of each of the sub headlight light sources 13La, 13Lb, and 13Lc extend along an alignment direction in which the sub headlight light sources 13La, 13Lb, and 13Lc are aligned. The longer sides of the sub headlight light sources 13La, 13Lb, and 13Lc are opposed to one another.

In an example shown in FIG. 8(c), a main headlight light source 11 of single lamp type is provided in a center portion on the front surface of the front cover 18.

The sub headlight light sources 13La, 13Lb, and 13Lc are provided to the left of the main headlight light source 11, and arranged in this order from the lower and outer side with respect to the width direction of the vehicle to the upper and inner side with respect to the width direction of the vehicle.

Each of the sub headlight light sources 13La, 13Lb, and 13Lc has a shape that extends from the lower and inner side with respect to the width direction of the vehicle toward the upper and outer side with respect to the width direction of the vehicle. The shorter sides of each of the sub headlight light sources 13La, 13Lb, and 13Lc extend along an alignment direction in which the sub headlight light sources 13La, 13Lb, and 13Lc are aligned. The longer sides of the sub headlight light sources 13La, 13Lb, and 13Lc are opposed to one another.

In an example shown in FIG. 8(d), the motorcycle 10 includes main headlight light sources 11 of two lamp type. Each of the main headlight light sources 11 is provided in each of right and left portions on the front surface of the front cover 18.

The sub headlight light sources 13La, 13Lb, and 13Lc are provided above the main headlight light source 11, and arranged in this order from the lower and outer side with respect to the width direction of the vehicle to the upper and inner side with respect to the width direction of the vehicle.

Each of the sub headlight light sources 13La, 13Lb, and 13Lc has a shape that extends from the lower and inner side with respect to the width direction of the vehicle toward the upper and outer side with respect to the width direction of the vehicle. The longer sides of each of the sub headlight light sources 13La, 13Lb, and 13Lc are inclined at an inclination angle that varies among the sub headlight light sources 13La, 13Lb, and 13Lc. The longer sides of the sub headlight light source located upper are inclined with a larger inclination angle than the longer sides of the sub headlight light source located lower.

In an example shown in FIG. 8(e), a main headlight light source 11 of single lamp type is provided in a center portion on the front surface of the front cover 18. An upper edge of the main headlight light source 11 has a curved shape (circular arc) protruding upward.

The sub headlight light sources 13La, 13Lb, and 13Lc are provided at one side with respect to the width direction of the vehicle, and arranged along the upper edge of the main headlight light source 11, sequentially from the lower and outer side with respect to the width direction of the vehicle to the upper and inner side with respect to the width direction of the vehicle. The sub headlight light sources 13La, 13Lb, and 13Lc are arranged in the shape of a curve protruding upward and outward.

Each of the sub headlight light sources 13La, 13Lb, and 13Lc has a shape that extends from the lower and outer side with respect to the width direction of the vehicle toward the upper and inner side with respect to the width direction of the vehicle. The longer sides of each of the sub headlight light sources 13La, 13Lb, and 13Lc extend along an alignment direction in which the sub headlight light sources 13La, 13Lb, and 13Lc are aligned. The shorter sides of the sub headlight light sources 13La, 13Lb, and 13Lc are opposed to one another.

In an example shown in FIG. 8(f), the motorcycle 10 includes main headlight light sources 11 of two lamp type. Each of the main headlight light sources 11 is provided in each of right and left portions on the front surface of the front cover 18.

The sub headlight light sources 13La, 13Lb, and 13Lc are provided above and outward of the main headlight light source 11, and arranged in this order from the lower and outer side with respect to the width direction of the vehicle to the upper and inner side with respect to the width direction of the vehicle.

Each of the sub headlight light sources 13La, 13Lb, and 13Lc has a shape that extends from the lower and inner side with respect to the width direction of the vehicle toward the upper and outer side with respect to the width direction of the vehicle. The shorter sides of each of the sub headlight light sources 13La, 13Lb, and 13Lc extend along an alignment direction in which the sub headlight light sources 13La, 13Lb, and 13Lc are aligned. The longer sides of the sub headlight light sources 13La, 13Lb, and 13Lc are opposed to one another.

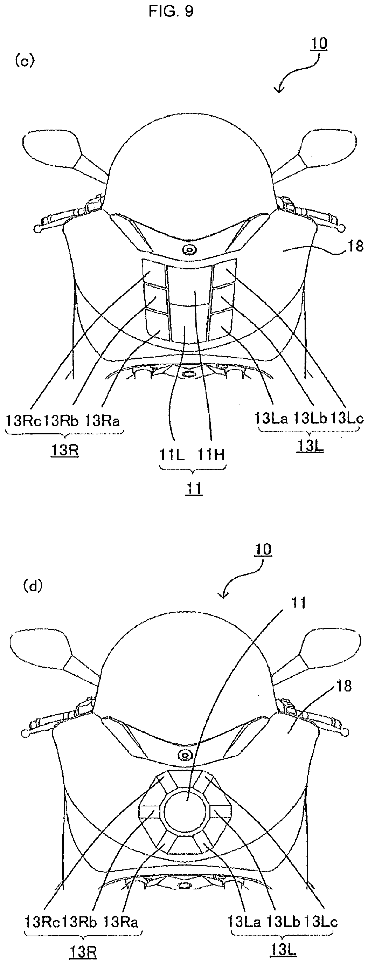

FIG. 9 illustrates examples in which a plurality of sub headlight light sources that are arranged so as to overlap one another with respect to the vertical direction when seen from the front side of the motorcycle 10 are sequentially turned on from the sub headlight light source arranged lowermost in accordance with an increase in the lean angle.

FIGS. 9(a) to 9(d) are front elevational views each schematically showing, on an enlarged scale, a part of a motorcycle according to another embodiment of the present teaching.

In an example shown in FIG. 9(a), the motorcycle 10 includes main headlight light sources 11 of two lamp type. Each of the main headlight light sources 11 is provided in each of right and left portions on the front surface of the front cover 18.

Between the right and left main headlight light sources 11, there are provided sub headlight light sources 13La, 13Lb, and 13Lc that illuminate an area ahead and to the left of the motorcycle 10 and sub headlight light sources 13Ra, 13Rb, and 13Rc that illuminate an area ahead and to the right of the motorcycle 10. The sub headlight light sources 13La, 13Lb, and 13Lc and the sub headlight light sources 13Ra, 13Rb, and 13Rc are arranged in an alternate manner sequentially from the lower side, and form a single line along the vertical direction.

In an example shown in FIG. 9(b), the motorcycle 10 includes main headlight light sources 11 of two lamp type. Each of the main headlight light sources 11 is provided in each of right and left portions on the front surface of the front cover 18.

Between the right and left main headlight light sources 11, there are provided sub headlight light sources 13La, 13Lb, and 13Lc that illuminate an area ahead and to the left of the motorcycle 10 and sub headlight light sources 13Ra, 13Rb, and 13Rc that illuminate an area ahead and to the right of the motorcycle 10. The sub headlight light sources 13La, 13Lb, and 13Lc form a left-hand single line along the vertical direction. The sub headlight light sources 13Ra, 13Rb, and 13Rc form a right-hand single line along the vertical direction.

In an example shown in FIG. 9(c), the motorcycle 10 includes main headlight light sources 11 of two lamp type composed of a high beam light source 11 H and a low beam light source 11 L. The low beam light source 11 L and the high beam light source 11 H are arranged in the vertical direction. Although in this embodiment the low beam light source 11 L is arranged lower, the high beam light source 11 H may be arranged lower.

At the left side of the main headlight light sources 11 arranged in the vertical direction, a plurality of sub headlight light sources 13La, 13Lb, and 13Lc are arranged so as to form a line along the vertical direction. The main headlight light source 11 is adjacent to the sub headlight light sources 13La, 13Lb, and 13Lc with respect to the width direction of the vehicle.

In an example shown in FIG. 9(d), a main headlight light source 11 of single lamp type is provided in a center portion on the front surface of the front cover 18.

A plurality of sub headlight light sources 13La, 13Lb, and 13Lc are arranged radially around the main headlight light source 11. The sub headlight light sources 13La, 13Lb, and 13Lc are arranged in this order from the lower side. More specifically, the sub headlight light source 13La is located at the lower left side of the main headlight light source 11, the sub headlight light source 13Lb is located at the left side of the main headlight light source 11, and the sub headlight light source 13Lc is located at the upper left side of the main headlight light source 11.

The motorcycle 10 according to these embodiments includes two sub headlight units 13L and 13R, each of which is provided at each side with respect to the width direction of the vehicle. However, the present teaching is not limited to this example. For example, in a possible configuration, the sub headlight units 13L and 13R each provided at each side with respect to the width direction of the vehicle are formed integral with each other, as a single sub headlight unit.

According to the present teaching, a sub headlight unit may be a physically integrated unit, or alternatively a plurality of sub headlight light sources included in a sub headlight unit may be physically divided light sources.

In these embodiments, the sub headlight units 13L and 13R are members separate from the main headlight light source 11. However, the present teaching is not limited to this example. It may be acceptable that a sub headlight unit is integrated with a main headlight. In such a case, the sub headlight unit include the main headlight.

The above-described embodiments illustrate a case where the number of sub headlight light sources that illuminate one side with respect to the width direction of the vehicle is three. However, according to the present teaching, it suffices that the number of sub headlight light sources that illuminate one side with respect to the width direction of the vehicle is two or more, and not necessarily limited to three.

The lean angle sensor 22 and the vehicle speed sensor 23 correspond to a detection part for detecting variables available for obtaining the lean angle of the motorcycle 10. Although the detection part includes the lean angle sensor 22 and the vehicle speed sensor 23 in these embodiments, the present teaching is not limited to this example. For example, the detection part may include the lean angle sensor 22 while not including the vehicle speed sensor 23. The controller 20 corresponds to a control part of the present teaching. However, a hardware configuration of the present teaching is not limited to this example. The control part determines whether or not the lean angle of the motorcycle 10 has reached the reference value based on the variables detected by the detection part. At this time, it is not always necessary that the control part calculates the lean angle. Details of processing performed in the control part are not particularly limited. For example, it may be possible that a memory provided in the controller 20 serving as the control part stores, in the form of data, a table in which the angular velocity (roll rate) and the vehicle speed are associated with a result of whether or not the lean angle has reached a first reference value. In this case, the control part refers to the table based on the angular velocity and the vehicle speed, and thereby can determine whether or not the lean angle has reached the first reference value without calculating the lean angle.

In these embodiments, the lean angle is the angle of inclination of the vehicle body to the inner side of a curve relative to the upright state (vertical direction). However, the present teaching is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

These embodiments describe a case where the sub headlight unit is a member separate from the control part (controller 20) and the detection part (the lean angle sensor 22 and the vehicle speed sensor 23). However, the present teaching is not limited to this example. The sub headlight unit may include at least one of the control part, a communication part, and the detection part.

These embodiments describe a case where the sub headlight light source is turned on in accordance with the lean angle. Instead, according to the present teaching, the sub headlight light source may be configured such that a turn-on function in accordance with the lean angle is manually activated or deactivated. In this case as well, the sub headlight light source is turned on not manually but in accordance with the lean angle. In the flasher, on the other hand, flashing/turn-off is manually switched. In this manner, the sub headlight light source is different from the flasher and the main headlight.

The sub headlight light source may be also configured such that an instruction for turn-on or turn-off is manually inputted. In such a case, when the instruction is not inputted, the sub headlight light source is turned on in accordance with the lean angle, while when the instruction is inputted, turn-on or turn-off is performed in accordance with the instruction. In this case as well, the sub headlight light source is different from the flasher, in that a function of turning on the sub headlight light source in accordance with the lean angle is provided.

According to the present teaching, turning on the sub headlight light source in accordance with the lean angle is not necessarily limited to directly changing the sub headlight light source from a turn-off state to a turn-on state in accordance with the lean angle, but may also include gradually changing the sub headlight light source from the turn-off state to the turn-on state in accordance with the lean angle. Here, gradually changing the sub headlight light source from the turn-off state to the turn-on state in accordance with the lean angle includes continuously changing the sub headlight light source from the turn-off state to the turn-on state and stepwise changing the sub headlight light source from the turn-off state to the turn-on state. The turn-on state is not limited to a full light turn-on state at the rated power level, but may also include a dimmed light turn-on state in which the output is controlled to less than the output in the full light turn-on state. In the full light turn-on state, the turn-on may be performed with an output higher than the rated power (for example, with the maximum output). It is to be noted that the output in the dimmed light turn-on state is higher than the output in the turn-off state. Turning on the sub headlight light source in accordance with the lean angle may include changing the brightness of the sub headlight light source to a predetermined brightness higher than the brightness in the turn-off state in accordance with the lean angle.

In other words, turning on the sub headlight light source in accordance with the lean angle is not limited to the following case (i), but may also include the following cases (ii) to (iv).

(i) The sub headlight light source is directly or gradually changed from the turn-off state to the full light turn-on state in accordance with the lean angle.
(ii) The sub headlight light source is directly or gradually changed from the turn-off state to the dimmed light turn-on state in accordance with the lean angle.
(iii) The sub headlight light source is directly or gradually changed from the dimmed light turn-on state to the full light turn-on state in accordance with the lean angle.
(iv) The sub headlight light source is directly or gradually changed from a first dimmed light turn-on state to a second dimmed light turn-on state in accordance with the lean angle (the brightness in the second dimmed light turn-on state is higher than the brightness in the first dimmed light turn-on state).

Here, in a case where the sub headlight light source is a light source (for example, an LED) whose brightness is controlled under a pulse width modulation control, turning on the sub headlight light source in accordance with the lean angle may include continuously or gradually changing the duty cycle of the sub headlight light source from 0 to a value greater than 0 in accordance with the lean angle.

In the description of these embodiments, the sub headlight light source is turned on in accordance with the lean angle. Here, the sub headlight light source is turned on in accordance with the lean angle because the sub headlight light source functions mainly as a light for ensuring the field of view of the rider of the vehicle. Therefore, in a well-lit situation, for example, in daytime, the sub headlight light source may not necessarily be turned on in accordance with the lean angle.

The embodiments also discloses a sub headlight unit 13L,13R used with a main headlight light source 11 provided in the vehicle, the main headlight light source 11 being configured to illuminate an area ahead in front of the vehicle. Under a state where the vehicle is upright, the sub headlight light source that is at the highest position when the vehicle is upright is located above the main headlight light source 11. Under a state where the vehicle is upright, height positions of the plurality of sub headlight light sources 13La,13Lb,13Lc,13Ra,13Rb,13Rc are wholly or partially coincident with a height position of the main headlight light source 11. The sub headlight units 13L,13R and the main headlight light source 11 are integrated within the main headlight. Alternatively, the sub headlight units 13L,13R are separate from the main headlight light source 11 of the main headlight.

The embodiments also discloses a method for controlling a sub headlight unit for use in a vehicle that leans into turns. The sub headlight unit 13L,13R including a plurality of sub headlight light sources 13La,13Lb,13Lc,13Ra, 13Rb,13Rc that illuminate, at least on one side with respect to a width direction of the vehicle, an area ahead and outward of the vehicle with respect to the width direction of the vehicle, each of the plurality of sub headlight light sources 13La, 13Lb,13Lc,13Ra,13Rb,13Rc being arranged such that, along with inclination of the vehicle from an upright state to the one side, the sub headlight light source moves downward from its position taken when the vehicle is upright, and the method comprises:

turning on the plurality of sub headlight light sources 13La,13Lb,13Lc,13Ra,13Rb,13Rc in accordance with different lean angles of the vehicle leaning to the one side, and
turning on the sub headlight light source 13Lc,13Rc upon a large lean angle of the vehicle being located higher under a state where the vehicle is upright than the sub headlight light source 13La,13Lc configured to be turned on upon a small lean angle of the vehicle. The plurality of sub headlight light sources 13La,13Lb,13Lc,13Ra,13Rb, 13Rc are arranged neighboring one another, under a state where the vehicle is upright, height positions of the neighboring sub headlight light sources 13La,13Lb,13Lc,13Ra,13Rb,13Rc are partially coincident. The sub headlight unit 13L,13R is used with a main headlight light source 11 provided in the vehicle, the main headlight light source 11 being configured to illuminate an area ahead in front of the vehicle. Under a state where the vehicle is upright, the sub headlight light source that is at the highest position when the vehicle is upright is located above the main headlight light source 11. Under a state where the vehicle is upright, height positions of the plurality of sub headlight light sources 13La,13Lb,13Lc,13Ra,13Rb,13Rc are wholly or partially coincident with a height position of the main headlight light source 11. Moreover, when seen from the front side of the vehicle in the upright state, positions where the plurality of sub headlight light sources 13La,13Lb,13Lc,13Ra,13Rb,13Rc are arranged are displaced from one another with respect to the width direction of the vehicle, and the method comprises:

> turning on the sub headlight light source 13Lc,13Rc upon a large lean angle of the vehicle being located higher and more outward with respect to the width direction of the vehicle under a state where the vehicle is upright than the sub headlight light source 13La,13Lc configured to be turned on upon a small lean angle of the vehicle. Moreover, when seen from the front side of the vehicle in the upright state, cut-off lines of the plurality of sub headlight light sources 13La,13Lb,13Lc,13Ra,13Rb,13Rc are wholly or partially contained in a space above a horizontal line,
> under a state where the vehicle is upright, the cut-off line of the sub headlight light source located higher is inclined with a larger inclination angle relative to the horizontal line than the cut-off line of the sub headlight light source located lower.

[DESCRIPTION OF THE REFERENCE SIGNS]

10 motorcycle (vehicle that leans into turns)
11 main headlight light source
11 H high beam light source
11 L low beam light source
12 handlebar
13L, 13R sub headlight unit
13La, 13Lb, 13Lc, 13Ra, 13Rb, 13Rc sub headlight light source
14L, 14R flasher
15 operation switch
16 front wheel
17 frontfork
18 front cover
20 controller
22 lean angle sensor
23 vehicle speed sensor

**Claims**

1.  A sub headlight unit for use in a vehicle that leans into turns,
    the sub headlight unit (13L,13R) including a plurality of sub headlight light sources (13La,13Lb,13Lc,13Ra,13Rb, 13Rc) that illuminate, at least on one side with respect to a width direction of the vehicle, an area ahead and outward of the vehicle with respect to the width direction of the vehicle,
    each of the plurality of sub headlight light sources (13La,13Lb,13Lc,13Ra,13Rb,13Rc) being arranged such that, along with inclination of the vehicle from an upright state to the one side, the sub headlight light source moves downward from its position taken when the vehicle is upright, and the plurality of sub headlight light sources (13La, 13Lb, 13Lc, 13Ra, 13Rb, 13Rc) being configured to be turned on in accordance with different lean angles of the vehicle leaning to the one side,
    under a state where the vehicle is upright, the sub headlight light source configured to be turned on upon a large lean angle of the vehicle being located higher than the sub headlight light source configured to be turned on upon a small lean angle of the vehicle.

2.  A sub headlight unit according to claim 1, wherein the plurality of sub headlight light sources (13La,13Lb,13Lc,13Ra, 13Rb,13Rc) are arranged neighboring one another,
    under a state where the vehicle is upright, height positions of the neighboring sub headlight light sources (13La, 13Lb,13Lc,13Ra,13Rb,13Rc) are partially coincident.

3. A sub headlight unit according to claim 1 or 2, wherein the sub headlight unit (13L, 13R) is used with a main headlight light source (11) provided in the vehicle, the main headlight light source (11) being configured to illuminate an area ahead in front of the vehicle.

4. A sub headlight unit according to claim 3, wherein under a state where the vehicle is upright, the sub headlight light source that is at the highest position when the vehicle is upright is located above the main headlight light source (11).

5. A sub headlight unit according to claim 3 or 4, wherein under a state where the vehicle is upright, height positions of the plurality of sub headlight light sources (13La, 13Lb, 13Lc, 13Ra, 13Rb, 13Rc) are wholly or partially coincident with a height position of the main headlight light source (11).

6. A sub headlight unit according to any one of claims 3 to 5, wherein the sub headlight units (13L,13R) and the main headlight light source (11) are integrated within the main headlight, or the sub headlight units (13L,13R) are separate from the main headlight light source (11) of the main headlight.

7. A sub headlight unit according to any one of claims 1 to 6, wherein when seen from the front side of the vehicle in the upright state, positions where the plurality of sub headlight light sources (13La,13Lb,13Lc,13Ra,13Rb,13Rc) are arranged are displaced from one another with respect to the width direction of the vehicle, under a state where the vehicle is upright, the sub headlight light source configured to be turned on upon a large lean angle of the vehicle is located higher and more outward with respect to the width direction of the vehicle than the sub headlight light source configured to be turned on upon a small lean angle of the vehicle.

8. A sub headlight unit according to any one of claims 1 to 7, wherein when seen from the front side of the vehicle in the upright state, cut-off lines of the plurality of sub headlight light sources (13La, 13Lb, 13Lc, 13Ra, 13Rb, 13Rc) are wholly or partially contained in a space above a horizontal line,
under a state where the vehicle is upright, the cut-off line of the sub headlight light source located higher is inclined with a larger inclination angle relative to the horizontal line than the cut-off line of the sub headlight light source located lower.

9. A sub headlight unit according to any one of claims 1 to 8, wherein the plurality of sub headlight light sources (13La, 13Lb,13Lc,13Ra,13Rb,13Rc) are arranged so as to overlap one another with respect to a vertical direction when seen from the front side of the vehicle and are sequentially turned on from the sub headlight light source arranged lowermost in accordance with an increase in the lean angle.

10. A sub headlight system for use in a vehicle that leans into turns,
the sub headlight system comprising:

> the sub headlight unit (13L,13R) according to any one of claims 1 to 9;
> a detection part (22) that detects a variable available for obtaining the lean angle of the vehicle; and
> a control part (20) that turns on the plurality of sub headlight light sources (13La,13Lb,13Lc,13Ra,13Rb,13Rc) in accordance with the lean angle of the vehicle obtained based on a result of detection by the detection part (22).

11. A vehicle that leans into turns, the vehicle comprising the system according to claim 10.

12. A method for controlling a sub headlight unit for use in a vehicle that leans into turns,
the sub headlight unit (13L,13R) including a plurality of sub headlight light sources (13La,13Lb,13Lc,13Ra,13Rb, 13Rc) that illuminate, at least on one side with respect to a width direction of the vehicle, an area ahead and outward of the vehicle with respect to the width direction of the vehicle,
each of the plurality of sub headlight light sources (13La,13Lb,13Lc,13Ra,13Rb,13Rc) being arranged such that, along with inclination of the vehicle from an upright state to the one side, the sub headlight light source moves downward from its position taken when the vehicle is upright, and the method comprises:

> turning on the plurality of sub headlight light sources
> (13La,13Lb,13Lc,13Ra,13Rb,13Rc) in accordance with different lean angles of the vehicle leaning to the one side, and,
> turning on the sub headlight light source (13Lc,13Rc) upon a large lean angle of the vehicle being located higher under a state where the vehicle is upright than the sub headlight light source (13La,13Lc) configured to be turned on upon a small lean angle of the vehicle.

**13.** A method for controlling a sub headlight unit according to claim 11, wherein the plurality of sub headlight light sources (13La,13Lb,13Lc,13Ra,13Rb,13Rc) are arranged neighboring one another,
under a state where the vehicle is upright, height positions of the neighboring sub headlight light sources (13La, 13Lb,13Lc,13Ra,13Rb,13Rc) are partially coincident, and/or the sub headlight unit (13L,13R) is used with a main headlight light source (11) provided in the vehicle, the main headlight light source (11) being configured to illuminate an area ahead in front of the vehicle.

**14.** A method for controlling a sub headlight unit according to claim 13, wherein under a state where the vehicle is upright, the sub headlight light source that is at the highest position when the vehicle is upright is located above the main headlight light source (11), and/or under a state where the vehicle is upright, height positions of the plurality of sub headlight light sources (13La,13Lb,13Lc,13Ra,13Rb,13Rc) are wholly or partially coincident with a height position of the main headlight light source (11).

**15.** A method for controlling a sub headlight unit according to any one of claims 11 to 14, wherein when seen from the front side of the vehicle in the upright state, positions where the plurality of sub headlight light sources (13La,13Lb, 13Lc,13Ra,13Rb,13Rc) are arranged are displaced from one another with respect to the width direction of the vehicle, and the method comprises:

turning on the sub headlight light source (13Lc,13Rc) upon a large lean angle of the vehicle being located higher and more outward with respect to the width direction of the vehicle under a state where the vehicle is upright than the sub headlight light source (13La,13Lc) configured to be turned on upon a small lean angle of the vehicle.

**16.** A method for controlling a sub headlight unit according to any one of claims 11 to 15, wherein when seen from the front side of the vehicle in the upright state, cut-off lines of the plurality of sub headlight light sources (13La, 13Lb, 13Lc, 13Ra, 13Rb, 13Rc) are wholly or partially contained in a space above a horizontal line,
under a state where the vehicle is upright, the cut-off line of the sub headlight light source located higher is inclined with a larger inclination angle relative to the horizontal line than the cut-off line of the sub headlight light source located lower.

FIG.1

FIG.2

FIG.3

FIG.4

FIG.5

(a)

10

13La

11

(b)

10

13La

13Lb

11

(c)

10

13Lc

13Lb

13La

11

FIG.6

FIG. 7

(a) <u>10</u>

18

13Rc 13Rb 13Ra  11  13La 13Lb 13Lc

<u>13R</u>  <u>13L</u>

(b) <u>10</u>

18  11

13Rc 13Rb 13Ra  13La 13Lb 13Lc

<u>13R</u>  <u>13L</u>

25

FIG. 7

(c)

10

18

13Rc 13Rb 13Ra    11    13La 13Lb 13Lc

13R    13L

(d)

10

18

13Rc 13Rb 13Ra  11  13La 13Lb 13Lc

13R    13L

FIG. 8

(a)

13Ra 13Rb 13Rc  11  13Lc 13Lb 13La

13R          13L

(b)

13Ra 13Rb 13Rc  11  13Lc 13Lb 13La

13R          13L

(c)

13R { 13Rc — 13Lc } 13L
      13Rb — 13Lb
      13Ra — 13La

11

FIG. 8

(d)

13Ra 13Rb 13Rc    11    13Lc 13Lb 13La

13R                        13L

(e)

13Ra 13Rb 13Rc    11    13Lc 13Lb 13La

13R                        13L

(f)

13Rc                13Lc
13R  13Rb            13Lb  13L
13Ra                13La

11

FIG. 9

(a)

10

18

11                    11

13Rc 13Rb 13Ra        13La 13Lb 13Lc

13R                   13L

(b)

10

18

11                    11

13Rc 13Rb 13Ra        13La 13Lb 13Lc

13R                   13L

FIG. 9

(c)

<u>10</u>

18

13Rc 13Rb 13Ra
<u>13R</u>

11L  11H
<u>11</u>

13La 13Lb 13Lc
<u>13L</u>

(d)

<u>10</u>

11

18

13Rc 13Rb 13Ra
<u>13R</u>

13La 13Lb 13Lc
<u>13L</u>

Europäisches
Patentamt

European
Patent Office

Office européen
des brevets

# EUROPEAN SEARCH REPORT

Application Number

EP 16 18 5519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2008 001305 A (KOITO MFG CO LTD) 10 January 2008 (2008-01-10) * paragraphs [0014], [0015], [0020], [0032] * * figures 1-4 * | 1-16 | INV. B60Q1/18 B60Q1/12 B62J6/02 |
| X | WO 2010/061651 A1 (YAMAHA MOTOR CO LTD [JP]; OOBA JUNICHI [JP]) 3 June 2010 (2010-06-03) * abstract * * figures 1-5, 10 * | 1-7, 9-14,16 | |
| X | US 5 426 571 A (JONES JERRY [US]) 20 June 1995 (1995-06-20) * abstract * * column 12, lines 52-68 * * figure 24 * | 1-7, 9-14,16 | |
| E | EP 2 657 076 A1 (YAMAHA MOTOR CO LTD [JP]) 30 October 2013 (2013-10-30) * the whole document * | 1-16 | |
| E | EP 2 641 780 A2 (YAMAHA MOTOR CO LTD [JP]) 25 September 2013 (2013-09-25) * the whole document * | 1-4,6-16 | TECHNICAL FIELDS SEARCHED (IPC) B60Q B62J |
| E | EP 2 657 080 A2 (YAMAHA MOTOR CO LTD [JP]) 30 October 2013 (2013-10-30) * the whole document * | 1-16 | |
| E | EP 2 641 779 A2 (YAMAHA MOTOR CO LTD [JP]) 25 September 2013 (2013-09-25) * the whole document * | 1-16 | |
| E | EP 2 657 078 A2 (YAMAHA MOTOR CO LTD [JP]) 30 October 2013 (2013-10-30) * the whole document * | 1-16 | |

-/--

The present search report has been drawn up for all claims

| Place of search | Date of completion of the search | Examiner |
|---|---|---|
| Munich | 31 January 2017 | Aubard, Sandrine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 18 5519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 2 641 778 A2 (YAMAHA MOTOR CO LTD [JP]) 25 September 2013 (2013-09-25) * the whole document * | 1-4,6-16 | |
| A,D | JP 2009 120057 A (STANLEY ELECTRIC CO LTD) 4 June 2009 (2009-06-04) * figure 6 * | 1,9 | |
| X | JP 2010 149836 A (YAMAHA MOTOR CO LTD) 8 July 2010 (2010-07-08) * abstract * * figures 1-5, 10 * | 1-7, 9-14,16 | |

TECHNICAL FIELDS
SEARCHED      (IPC)

The present search report has been drawn up for all claims

| Place of search | Date of completion of the search | Examiner |
|---|---|---|
| Munich | 31 January 2017 | Aubard, Sandrine |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 18 5519

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2017

| Patent document cited in search report | | Publication date | Patent family member(s) | | Publication date |
|---|---|---|---|---|---|
| JP 2008001305 | A | 10-01-2008 | JP | 4864562 B2 | 01-02-2012 |
| | | | JP | 2008001305 A | 10-01-2008 |
| WO 2010061651 | A1 | 03-06-2010 | JP | 5249350 B2 | 31-07-2013 |
| | | | JP | 5572192 B2 | 13-08-2014 |
| | | | JP | 5844846 B2 | 20-01-2016 |
| | | | JP | 2013032154 A | 14-02-2013 |
| | | | JP | 2014184955 A | 02-10-2014 |
| | | | WO | 2010061651 A1 | 03-06-2010 |
| US 5426571 | A | 20-06-1995 | NONE | | |
| EP 2657076 | A1 | 30-10-2013 | EP | 2657076 A1 | 30-10-2013 |
| | | | JP | 2013230774 A | 14-11-2013 |
| EP 2641780 | A2 | 25-09-2013 | AP | 3657 A | 07-04-2016 |
| | | | BR | 102013006108 A2 | 02-06-2015 |
| | | | CN | 103496414 A | 08-01-2014 |
| | | | EP | 2641780 A2 | 25-09-2013 |
| | | | JP | 2013193562 A | 30-09-2013 |
| | | | US | 2013241414 A1 | 19-09-2013 |
| EP 2657080 | A2 | 30-10-2013 | AP | 3877 A | 31-10-2016 |
| | | | BR | 102013007924 A2 | 16-06-2015 |
| | | | CN | 103373416 A | 30-10-2013 |
| | | | EP | 2657080 A2 | 30-10-2013 |
| | | | JP | 2013230773 A | 14-11-2013 |
| EP 2641779 | A2 | 25-09-2013 | BR | 102013003977 A2 | 16-06-2015 |
| | | | CN | 103318310 A | 25-09-2013 |
| | | | EP | 2641779 A2 | 25-09-2013 |
| | | | JP | 5615870 B2 | 29-10-2014 |
| | | | JP | 2013224126 A | 31-10-2013 |
| | | | US | 2013241413 A1 | 19-09-2013 |
| EP 2657078 | A2 | 30-10-2013 | AP | 3602 A | 24-02-2016 |
| | | | BR | 102013006286 A2 | 02-06-2015 |
| | | | CN | 103373417 A | 30-10-2013 |
| | | | EP | 2657078 A2 | 30-10-2013 |
| | | | JP | 2013230772 A | 14-11-2013 |
| EP 2641778 | A2 | 25-09-2013 | BR | 102013003993 A2 | 16-06-2015 |
| | | | CN | 103318311 A | 25-09-2013 |
| | | | EP | 2641778 A2 | 25-09-2013 |
| | | | EP | 3000657 A2 | 30-03-2016 |
| | | | JP | 5564524 B2 | 30-07-2014 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 16 18 5519

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2017

| Patent document cited in search report | Publication date | Patent family member(s) | | Publication date |
|---|---|---|---|---|
| | | JP | 2013193561 A | 30-09-2013 |
| | | US | 2013241412 A1 | 19-09-2013 |
| JP 2009120057 A | 04-06-2009 | JP | 4990104 B2 | 01-08-2012 |
| | | JP | 2009120057 A | 04-06-2009 |
| JP 2010149836 A | 08-07-2010 | JP | 5669907 B2 | 18-02-2015 |
| | | JP | 2010149836 A | 08-07-2010 |
| | | JP | 2013249064 A | 12-12-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009120057 A